# EUROPÄISCHE PATENTSCHRIFT

(11) **EP 4 008 030 B1**
(45) Veröffentlichungstag und Bekanntmachung des Hinweises auf die Patenterteilung: **09.10.2024**
(21) Anmeldenummer: 20754670.6
(22) Anmeldetag: 30.07.2020
(51) Int. Cl.: H01M 4/04, H01M 10/052

(54) **VERFAHREN ZUM BEREITSTELLEN EINER ELEKTRODENFOLIE ZUR HERSTELLUNG EINES LITHIUM-IONEN-AKKUMULATORS UND VERFAHREN ZUR HERSTELLUNG EINES LITHIUM-IONEN-AKKUMULATORS**
METHOD FOR PROVIDING AN ELECTRODE FOIL FOR PRODUCING A LITHIUM-ION RECHARGEABLE BATTERY AND METHOD FOR PRODUCING A LITHIUM-ION RECHARGEABLE BATTERY
PROCÉDÉ DE FOURNITURE D'UNE FEUILLE D'ÉLECTRODE POUR LA PRODUCTION D'UNE BATTERIE RECHARGEABLE AU LITHIUM-ION ET PROCÉDÉ DE PRODUCTION D'UNE BATTERIE RECHARGEABLE AU LITHIUM-ION

(30) Priorität: 02.08.2019 DE 102019120896
(43) Veröffentlichungstag der Anmeldung: 08.06.2022
(73) Patentinhaber: Plasmatreat GmbH, 33803 Steinhagen (DE)
(72) Erfinder: KNOSPE, Alexander, 31848 Bad Münder (DE); ASAD, Syed Salman, 33613 Bielefeld (DE); BUSKE, Christian, 33619 Bielefeld (DE); GOLDMANN, Hannes, 33104 Paderborn (DE)
(74) Vertreter: Cohausz & Florack
(86) Internationale Anmeldenummer: PCT/EP2020/071479
(87) Internationale Veröffentlichungsnummer: WO 2021/023612

(56) Entgegenhaltungen:
- JP-A- 2006 108 047
- JP-A- H0 428 174

## Beschreibung

Die Erfindung betrifft ein Verfahren zum Bereitstellen einer Elektrodenfolie zur Herstellung eines Lithium-Ionen-Akkumulators, bei dem eine Metallfolie mit einer Beschichtung aus Elektrodenmaterial bereitgestellt wird und bei dem die Beschichtung aus Elektrodenmaterial plasmabehandelt wird. Weiterhin betrifft die Erfindung ein Verfahren zur Herstellung eines Lithium-Ionen-Akkumulators, bei dem eine erste Elektrodenfolie für die negative Elektrode und eine zweite Elektrodenfolie für die positive Elektrode bereitgestellt werden, bei dem die erste und die zweite Elektrodenfolie unter Zwischenlage einer Separatorlage zu einem Folienstapel übereinander angeordnet werden und bei dem der Stapel mit einem flüssigem Elektrolyt getränkt wird.

Bei der Herstellung von Lithium-Ionen-Akkumulatoren ist es beispielsweise bekannt, eine mit Lithium-Nickel-Mangan-Cobalt-Oxiden beschichtete Aluminiumfolie für die positive Elektrode und eine mit Graphit beschichtete Kupferfolie für die negative Elektrode unter Zwischenlage einer Separatorlage in Form eines Polypropylen-Netzes zu einem Folienstapel übereinander anzuordnen, den Folienstapel zu einer zylindrischen Rolle aufzurollen oder zu einem rechteckigen Block aufzufalten, die Rolle bzw. den Block in einem Gehäuse anzuordnen und einen Elektrolyten, beispielsweise in Ethylencarbonat gelöste Lithiumsalze, in das Gehäuse einzufüllen, um das Elektrodenmaterial, d.h. die Lithium-Nickel-Mangan-Cobalt-Oxid-Beschichtung bzw. Graphit-Beschichtung, mit dem Elektrolyten zu tränken.

Zur Herstellung leistungsfähiger und langlebiger Akkumulatoren ist es wichtig, dass das Elektrodenmaterial möglichst vollständig von dem verwendeten Elektrolyten durchdrungen wird, damit die Lithium-Ionen im Akkumulator eine hohe Bewegungsfreiheit haben. Das Tränken des Elektrodenmaterials mit dem Elektrolyten muss daher besonders sorgfältig durchgeführt werden und kann bei der Herstellung einige Zeit in Anspruch nehmen. Dadurch ist die Herstellung von Lithium-Ionen-Akkumulatoren jedoch relativ zeitaufwendig und es besteht ein Bedarf daran, die Herstellungsdauern von Akkumulatoren zu verkürzen, ohne die Leistungsfähigkeit der Akkumulatoren einzuschränken.

Um die für das Tränken des Elektrodenmaterials mit Elektrolyt erforderliche Zeit zu reduzieren, wurde versucht, das Elektrodenmaterial in Niederdruckkammern durch induktiv oder kapazitiv gekoppeltes Plasma zu behandeln. Diesen Versuchen lag die Idee zugrunde, ein Plasma in den Poren der typischerweise porösen Elektrodenmaterial-Beschichtung entstehen zu lassen, um auf diese Weise die Oberflächenenergie derart zu erhöhen, dass eine Benetzung mit dem Elektrolyten verbessert wird.

Diese Technik ist wegen der erforderlichen Niederdruckkammern jedoch recht aufwändig und erlaubt keinen prozesstechnisch favorisierten, kontinuierlichen Betrieb. Zudem wurde durch die Niederdruck-Plasmabehandlung zwar tatsächlich eine Verkürzung der Zeitdauer für das vollständige Durchtränken des Elektrodenmaterials mit dem Elektrolyten (Tränkdauer) erreicht, dieser Zeitvorteil wurde durch den Ein- und Ausschleusevorgang in und aus der Niederdruckkammer jedoch zum Teil wieder aufgebraucht.

Aus der JP 2006 108047 A ist ein Verfahren zur Herstellung einer Batterie bekannt, bei dem in einem Gasvolumen bei der positiven oder negativen Elektrode eine Glimmentladung erzeugt wird. Weiterhin ist aus der JP H04 28174 A ein Verfahren bekannt, bei dem ein Kohlenstoffmaterial für eine Elektrode plasmabehandelt wird.

Aus der US 2013/183590 sind eine Elektrode für einen Lithium-Ionen-Akkumulator und ein Verfahren zu deren Herstellung bekannt. Aus der DE 10 2016 125 699 A1 sind eine Vorrichtung zur Erzeugung eines atmosphärischen Plasmastrahls sowie ein Verfahren zur Behandlung eines Stoffs bekannt. Aus der KR 101 664 541 B1 bzw. der KR 2015/0122297 A ist eine Vorrichtung zur Erzeugung eines atmosphärischen Plasmastrahls bekannt.

Vor diesem Hintergrund liegt der vorliegenden Erfindung die Aufgabe zugrunde, ein effizienteres Verfahren zum Bereitstellen einer Elektrodenfolie zur Herstellung eines Lithium-Ionen-Akkumulators sowie ein effizienteres Verfahren zur Herstellung eines Lithium-Ionen-Akkumulators zur Verfügung zu stellen.

Diese Aufgabe wird bei einem Verfahren zum Bereitstellen eine Elektrodenfolie zur Herstellung eines Lithium-Ionen-Akkumulators, bei dem eine Metallfolie mit einer Beschichtung aus Elektrodenmaterial bereitgestellt wird und bei dem die Beschichtung aus Elektrodenmaterial plasmabehandelt wird, erfindungsgemäß dadurch gelöst, dass die Beschichtung aus Elektrodenmaterial plasmabehandelt wird, indem die Beschichtung mit einem atmosphärischen Plasmastrahl beaufschlagt wird, wobei der atmosphärische Plasmastrahl mit einer Plasmadüse erzeugt wird.

Bei den dieser Erfindung zu Grunde liegenden Untersuchungen hat sich herausgestellt, dass sich auf diese Weise ein erheblicher Zeiteinsparungseffekt beim Tränken des Elektrodenmaterials mit Elektrolyt erreichen lässt.

Dies ist überraschend, da die Fachwelt bisher davon ausgegangen ist, dass das Elektrodenmaterial für eine signifikante Zeitersparnis beim Tränken mit Elektrolyt im Wesentlichen über sein gesamtes Volumen, d.h. über die gesamte Dicke der Beschichtung, plasmabehandelt werden muss. Da der Gegendruck eines unter Atmosphärendruck in den Poren des Elektrodenmaterials enthaltenen Gases dem Eindringen eines Plasmas entgegen wirken und daher nur eine recht oberflächliche Plasmabehandlung erlauben würde, ist man bisher davon ausgegangen, dass nur eine Vakuumplasmabehandlung zu den gewünschten Ergebnissen führen würde.

Wie sich nun jedoch herausgestellt hat, reicht bereits eine relativ oberflächliche Behandlung des Elektrodenmaterials mittels eines atmosphärischen Plasmastrahls aus, um einen signifikanten Effekt bei der Aufnahmefähigkeit des Elektrodenmaterials für den Elektrolyten zu bewirken und damit die gewünschten Zeitersparungseffekte bei der Herstellung eines Lithium-Ionen-Akkumulators ohne aufwändige und teure Vakuumumgebungen erreichen zu können.

Die Behandlung von Elektrodenmaterial mit einem atmosphärischen Plasmastrahl zur Reduzierung der Zeitdauer für das vollständige Durchtränken des Elektrodenmaterials mit dem Elektrolyten stellt damit eine völlige Abkehr von bisherigen Überlegungen dar.

Die oben genannte Aufgabe wird weiterhin bei einem Verfahren zur Herstellung eines Lithium-Ionen-Akkumulators, bei dem eine erste Elektrodenfolie für die negative Elektrode und eine zweite Elektrodenfolie für die positive Elektrode bereitgestellt werden, bei dem die erste und die zweite Elektrodenfolie unter Zwischenlage einer Separatorlage zu einem Folienstapel übereinander angeordnet werden und bei dem der Folienstapel mit einem flüssigem Elektrolyt getränkt wird, erfindungsgemäß dadurch gelöst, dass die erste und/oder die zweite Elektrodenfolie mit dem zuvor beschriebenen Verfahren bereitgestellt werden.

Mit anderen Worten wird bei dem Verfahren zur Herstellung eines Lithium-Ionen-Akkumulators eine erste Elektrodenfolie für die negative Elektrode und eine zweite Elektrodenfolie für die positive Elektrode bereitgestellt, die erste und die zweite Elektrodenfolie unter Zwischenlage einer Separatorlage zu einem Folienstapel übereinander angeordnet und der Folienstapel mit einem flüssigem Elektrolyt getränkt, wobei die erste und/oder die zweite Elektrodenfolie dadurch bereitgestellt werden, dass eine jeweilige Metallfolie mit einer jeweiligen Beschichtung aus Elektrodenmaterial bereitgestellt und die Beschichtung aus Elektrodenmaterial durch Beaufschlagen mit einem atmosphärischen Plasmastrahl plasmabehandelt wird.

Die erste Elektrodenfolie für die negative Elektrode weist insbesondere eine Metallfolie mit einer Beschichtung aus Elektrodenmaterial für die negative Elektrode auf und die zweite Elektrodenfolie für die positive Elektrode weist insbesondere eine Metallfolie mit einer Beschichtung aus Elektrodenmaterial für die positive Elektrode auf. Als Separatorlage kommt beispielsweise ein Kunststoffnetz, zum Beispiel ein Polypropylen-Netz, in Frage. Als Elektrolyt kommt zum Beispiel ein Lithiumsalz, wie Lithiumhexafluorophosphat (LiPF₆), Lithiumtetrafluorborat (LiBF₄) oder Lithiumbis(oxalato)borat (LiBOB), gelöst in einem wasserfreien aprotischen Lösungsmittel, wie z. B. Ethylencarbonat, in Betracht.

Der Folienstapel kann neben der ersten und zweiten Elektrodenfolie und der Separatorlage noch weitere Lagen umfassen, insbesondere eine Isolatorlage, um bei einem Aufrollen oder Falten des Folienstapels unerwünschte Kontaktierungen der Elektrodenfolien und somit Kurzschlüsse zu vermeiden.

Vor dem Tränken des Stapels mit dem flüssigen Elektrolyt kann der Folienstapel insbesondere aufgerollt oder gefaltet und vorzugsweise in ein Batteriegehäuse eingesetzt werden.

Im Folgenden werden verschiedene Ausführungsformen des zuvor beschriebenen Verfahrens zum Bereitstellen einer Elektrodenfolie und des zuvor beschriebenen Verfahrens zur Herstellung eines Lithium-Ionen-Akkumulators beschrieben, wobei die einzelnen Ausführungsformen sowohl für das Verfahren zum Bereitstellen einer Elektrodenfolie zur Herstellung eines Lithium-Ionen-Akkumulators als auch für das Verfahren zur Herstellung eines Lithium-Ionen-Akkumulators anwendbar sind und zudem untereinander kombiniert werden können.

Bei einer ersten Ausführungsform wird die Metallfolie mit der Beschichtung aus Elektrodenmaterial bereitgestellt, indem Elektrodenmaterial auf die Metallfolie aufgetragen wird, insbesondere in Form einer wasserbasierten Suspension, und das auf die Metallfolie aufgebrachte Elektrodenmaterial getrocknet und gewalzt, insbesondere kalandriert, wird, wobei die Beschichtung aus Elektrodenmaterial nach dem Walzen, insbesondere Kalandrieren, plasmabehandelt wird.

Um eine Elektrodenfolie mit einer gleichmäßig dünnen Beschichtung aus Elektrodenmaterial zu erhalten, kann das auf die Metallfolie aufgebrachte Elektrodenmaterial kalandriert werden. In diesem Fall erfolgt die Plasmabehandlung mit dem atmosphärischen Plasmastrahl vorzugsweise erst nach einem solchen Kalandrieren, da ein Kalandrieren nach der Plasmabehandlung zu einer Abschwächung der durch die Plasmabehandlung erreichten Oberflächenbehandlung führen würde.

In einer alternativen Ausführungsform kann die Plasmabehandlung aber auch vor dem Kalandrieren erfolgen. Da das Elektrodenmaterial vor dem Kalandrieren noch unverpresst ist, kann hierdurch in einigen Fällen eine tiefer in die Elektrodenmaterial-Beschichtung eindringende Plasmabehandlung erreicht werden.

Wenn die Plasmabehandlung nach dem Walzen, insbesondere Kalandrieren, erfolgt, ist es nicht unbedingt erforderlich, dass die Plasmabehandlung unmittelbar nach dem Walzen bzw. Kalandrieren erfolgt, vielmehr können weitere Verfahrensschritte zwischen dem Walzen bzw. Kalandrieren und der Plasmabehandlung erfolgen, beispielsweise ein weiteres Trocknen, wie zum Beispiel ein Vakuumtrocknen, der Beschichtung aus Elektrodenmaterial.

Das Elektrodenmaterial kann beispielsweise in Form einer Schlämme auf die Metallfolie aufgebracht werden. Zu diesem Zweck wird eine Mischung, insbesondere Suspension, aus dem eigentlichen Elektrodenmaterial und einer Flüssigkeit auf die Metallfolie aufgebracht. Die Flüssigkeit wird zum Beispiel durch Trocknen entfernt, so dass eine Beschichtung aus Elektrodenmaterial auf der Metallfolie verbleibt.

Bei einer weiteren Ausführungsform ist die Beschichtung aus Elektrodenmaterial porös. Auf diese Weise kann der Elektrolyt gut in die Beschichtung aus Elektrodenmaterial eindringen und der Effekt der Plasmabehandlung mittels atmosphärischen Plasmastrahls seine Wirkung entfalten.

Bei einer Ausführungsform wird als Metallfolie eine Aluminiumfolie oder eine Kupferfolie verwendet. Eine Aluminiumfolie wird insbesondere zur Bereitstellung einer Elektrodenfolie für die positive Elektrode, das heißt für die Kathode beim Entladungsvorgang, verwendet. Eine Kupferfolie wird insbesondere für die Bereitstellung einer Elektrodenfolie für die negative Elektrode, das heißt für die Anode beim Entladungsvorgang, verwendet.

Bei einer weiteren Ausführungsform enthält die Beschichtung aus Elektrodenmaterial eine oder mehrere der folgenden Verbindungen oder besteht vorzugsweise zumindest zu 90 Gew.-% daraus: Lithium-Cobalt(III)-Oxid (LiCoO₂), Lithium-Nickel-Mangan-Cobalt-Oxide (z.B. LiNiₓCo_{y}Mn_{z}O₂), Li-Spinelle (z.B. LiMn₂O₄), LiFePO₄. Diese Verbindungen eignen sich als Elektrodenmaterial für die positive Elektrode.

Bei einer weiteren Ausführungsform enthält die Beschichtung aus Elektrodenmaterial ein oder mehrere der folgenden Verbindungen oder besteht vorzugsweise zumindest zu 90 Gew.-% daraus: Graphit, andere Li-interkalierende Kohlenstoffe, nanokristallines, amorphes Silizium, Lithiumtitanate (z.B. Li₄Ti₅O₁₂), Zinndioxid (SnO₂). Diese Verbindungen eignen sich als Elektrodenmaterial für die negative Elektrode.

Die Beschichtung aus Elektrodenmaterial kann weiterhin ein Bindemittel aufweisen, beispielsweise Polyvinylidenfluorid oder Carboxymethylcellulose und/oder Styrol-Butadien-Kautschuk.

Erfindungsgemäß wird der atmosphärische Plasmastrahl mit einer Plasmadüse erzeugt, vorzugsweise durch hochfrequente elektrische, insbesondere bogenartige, Entladungen zwischen Elektroden in einem Arbeitsgasstrom. Die Plasmadüse weist insbesondere einen Arbeitsgaseinlass und eine Düsenöffnung auf, aus der der Plasmastrahl austritt.

Durch die Erzeugung des Plasmastrahls durch hochfrequente elektrische Entladung zwischen Elektroden in einem Arbeitsgasstrom wird ein reaktiver und gleichzeitig oberflächenschonender Plasmastahl erzeugt, mit dem sich die Beschichtung aus Elektrodenmaterial effektiv plasmabehandeln lässt, ohne diese zu beschädigen. Die Reaktivität des Plasmastrahls ist hoch genug, um eine ausreichende Plasmabehandlung der Beschichtung zu erreichen. Indem der Plasmastrahl auf die Beschichtung gerichtet wird, die reaktiven Spezies im Plasmastrahl also mit einer Relativgeschwindigkeit auf die Beschichtung treffen, wird trotz der oberflächlichen Behandlung bei Atmosphärendruck eine recht gute Eindringtiefe des Plasmastrahls in die Beschichtung erreicht, sodass die Beschichtung zumindest ausgehend von der Oberfläche bis zu einer bestimmt Tiefe plasmabehandelt wird.

Bei einer weiteren Ausführungsform wird zur Erzeugung des atmosphärischen Plasmastrahls eine Plasmadüse mit einer Düsenanordnung verwendet, die den mit der Plasmadüse erzeugten Plasmastrahl in mehrere aus mehreren Öffnungen der Düsenanordnung austretende Teilstrahlen aufteilt. Insbesondere können die näheren Düsenöffnungen entlang eines Kanals der Düsenanordnung angeordnet sein. Eine geeignete Düsenanordnung ist beispielsweise aus der DE 10 2016 125 699 A1 bekannt. Durch die Verwendung einer Plasmadüse mit einer solchen Düsenanordnung kann ein größerer Bereich der Beschichtung aus Elektrodenmaterial gleichzeitig behandelt werden, sodass die Plasmabehandlung effizienter und insbesondere mit einer geringeren Anzahl an Plasmadüsen durchgeführt werden kann. Insbesondere kann bei einer Relativbewegung zwischen der Düsenanordnung und der Beschichtung aus Elektrodenmaterial ein breiterer Streifen an der Oberfläche der Beschichtung behandelt werden. Es wurde festgestellt, dass auch bei Aufteilung des Plasmastrahls in Teilstrahlen noch eine ausreichende Behandlung der Beschichtung aus Elektrodenmaterial erreicht werden kann.

Weitere Merkmale und Vorteile der Erfindung ergeben sich aus der nachfolgenden Beschreibung von Ausführungsbeispielen, wobei auf die beigefügte Zeichnung Bezug genommen wird.

### In der Zeichnung zeigen

- Fig.1a-e: ein Ausführungsbeispiel des Verfahrens zum Bereitstellen einer Elektrodenfolie zur Herstellung eines Lithium-Ionen-Akkumulators,
- Fig. 2a-d: ein Ausführungsbeispiel des Verfahrens zur Herstellung eines Lithium-Ionen-Akkumulators,
- Fig. 3: eine für das Verfahren aus Fig. 1 verwendbare Plasmadüse,
- Fig. 4: eine weitere für das Verfahren aus Fig. 1 verwendbare Plasmadüse mit Düsenanordnung,
- Fig. 5a-c: ein weiteres Ausführungsbeispiel des Verfahrens zum Bereitstellen einer Elektrodenfolie zur Herstellung eines Lithium-Ionen-Akkumulators und
- Fig. 6a-c: ein weiteres Ausführungsbeispiel des Verfahrens zur Herstellung eines Lithium-Ionen-Akkumulators.

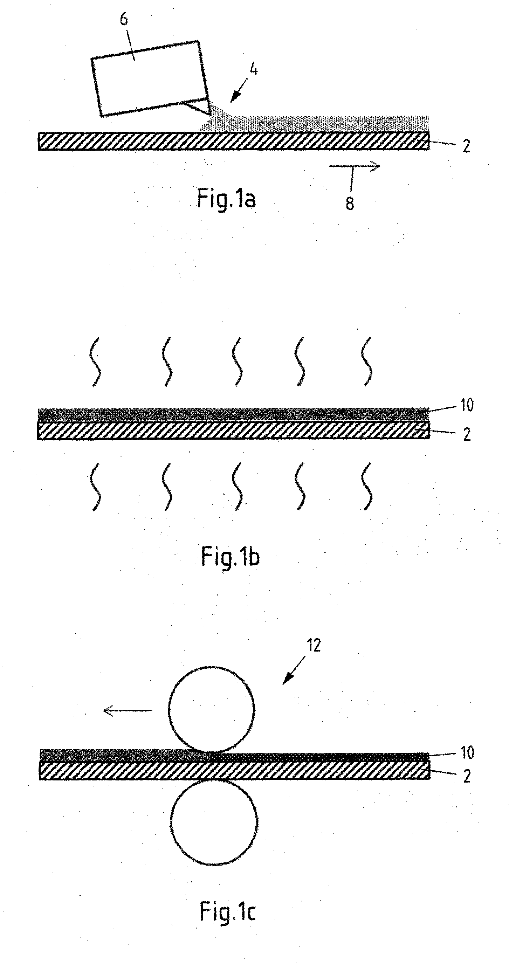

Die Figuren 1a-e zeigen ein Ausführungsbeispiel des Verfahrens zum Bereitstellen einer Elektrodenfolie zur Herstellung eines Lithium-Ionen-Akkumulators in schematischer Darstellung.

Die Figuren 1a-d zeigen zunächst die Bereitstellung einer Metallfolie mit einer Beschichtung aus Elektrodenmaterial. Zu diesem Zweck wird bei dem in Figur 1a dargestellten ersten Schritt zunächst eine Metallfolie 2 bereitgestellt und mit Elektrodenmaterial 4 beschichtet.

Wenn eine Elektrodenfolie für die positive Elektrode hergestellt werden soll, kann es sich bei der Metallfolie 2 insbesondere um eine Aluminiumfolie handeln und das Elektrodenmaterial kann insbesondere eine oder mehrere der folgenden Verbindungen enthalten oder vorzugsweise zumindest zu 90 Gew.-% daraus bestehen: Lithium-Cobalt(III)-Oxid (LiCoOz), Lithium-Nickel-Mangan-Cobalt-Oxide (z.B. LiNiₓCo_{y}Mn_{z}O2), Li-Spinelle (z.B. LiMn₂O₄), LiFePO₄.

Wenn eine Elektrodenfolie für die negative Elektrode hergestellt werden soll, kann es sich bei der Metallfolie 2 insbesondere um eine Kupferfolie handeln und das Elektrodenmaterial 4 kann insbesondere ein oder mehrere der folgenden Verbindungen enthalten oder vorzugsweise zumindest zu 90 Gew.-% daraus bestehen: Graphit, andere Li-interkalierende Kohlenstoffe, nanokristallines, amorphes Silizium, Lithiumtitanate (z.B. Li₄Ti₅O₁₂), Zinndioxid (SnOz).

Das Elektrodenmaterial 4 kann wie in Figur 1a illustriert als Schlämme in Form einer wässrigen Suspension auf die Metallfolie aufgebracht werden. Eine solche Schlämme enthält das eigentliche Elektrodenmaterial sowie eine Flüssigkeit, in der das Elektrodenmaterial aufgeschlämmt ist. Das Auftragen des Elektrodenmaterials 4 als Schlämme wird in Figur 1a schematisch mittels eines Auftragsbehälters 6 dargestellt, unter dem die Metallfolie 2 wegbewegt wird (Pfeil 8). Es kann jedoch auch jedes andere geeignete Beschichtungsverfahren verwendet werden.

Bei dem in Figur 1b dargestellten zweiten Schritt wird das als Schlämme aufgebrachte Elektrodenmaterial 4 getrocknet, beispielsweise in einem Trocknungsofen. Auf diese Weise verdampft die Flüssigkeit der Schlämme, sodass das Elektrodenmaterial 4 als feste Beschichtung 10 auf der Metallfolie 2 verbleibt.

In dem in Figur 1c schematisch dargestellten dritten Schritt wird die Beschichtung 10 aus Elektrodenmaterial 4 mit einer Walzeinrichtung 12 gewalzt, sodass die Beschichtung 10 eine gleichmäßige Schichtdicke erhält und das Material verpresst wird. Die Walzeinrichtung 12 kann insbesondere auch in Form eines Kalanders ausgebildet sein, so dass die Metallfolie 2 mit Beschichtung 10 kalandriert wird.

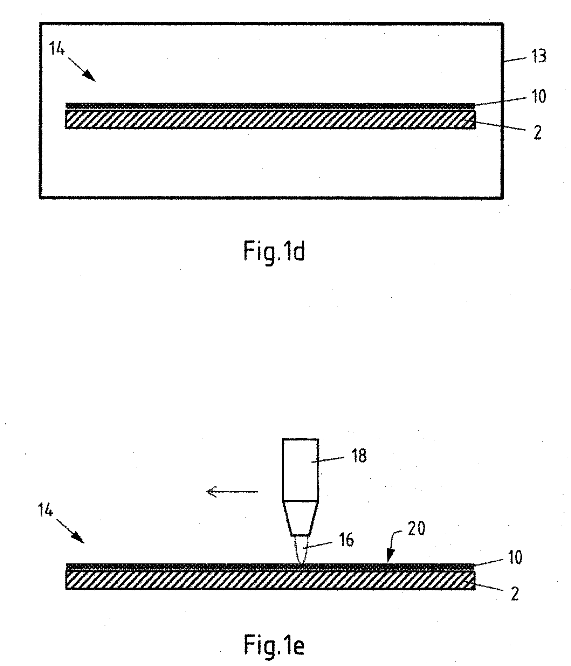

Anschließend kann in dem in Figur 1d dargestellten vierten Schritt eine weitere Trocknung, insbesondere eine Vakuumtrocknung in einem Vakuumofen 13, erfolgen, so dass in der Beschichtung 10 gegebenenfalls verbliebene Flüssigkeit verdampft.

Die auf diese Weise bereitgestellte Elektrodenfolie 14 mit der Metallfolie 2 und der Beschichtung 10 wird sodann in dem in Figur 1e dargestellten Schritt plasmabehandelt, indem die Beschichtung 10 mit einem atmosphärischen Plasmastrahl 16 beaufschlagt wird, der mittels hochfrequenter elektrischer Entladungen zwischen Elektroden in einem Arbeitsgasstrom in einer Plasmadüse 18 erzeugt wird. Auf diese Weise wird die Oberfläche 20 der Beschichtung 10 bis zu einer bestimmten Tiefe plasmabehandelt und damit für ein späteres Tränken der Beschichtung 10 mit flüssigem Elektrolyt vorbereitet.

Die Plasmabehandlung der Beschichtung 10 kann alternativ auch vor dem in Fig. 1d dargestellten zweiten Trocknungsschritt erfolgen.

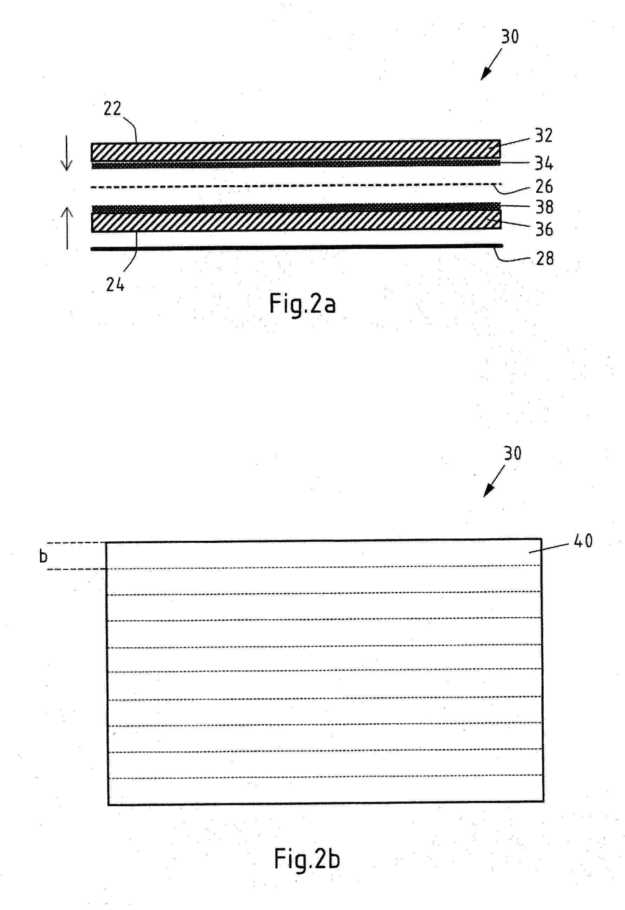

Die Figuren 2a-d zeigen nun ein Ausführungsbeispiel des Verfahrens zur Herstellung eines Lithium-Ionen-Akkumulators in schematischer Darstellung.

Bei dem in Figur 2a dargestellten ersten Schritt werden eine erste Elektrodenfolie 22 für die negative Elektrode, eine zweite Elektrodenfolie 24 für die positive Elektrode, eine Separatorlage 26, beispielsweise ein Netz aus Polypropylen, sowie eine Isolatorlage 28, beispielsweise eine Kunststofffolie, bereitgestellt und wie in Figur 2a dargestellt zu einem Folienstapel 30 derart übereinander geordnet, dass die Separatorlage 26 zwischen den beiden Elektrodenfolien 22, 24 angeordnet ist. Die Isolatorlage 28 kann wie in Fig. 2a dargestellt auf der Seite der zweiten Elektrodenfolie 24 oder stattdessen auf der Seite der ersten Elektrodenfolie 22 angeordnet werden. Für die Isolatorlage 28 kann das gleiche Material verwendet werden wie für die Separatorlage 26.

Die erste Elektrodenfolie 22 weist eine Metallfolie 32 und eine Beschichtung 34 aus Elektrodenmaterial für die negative Elektrode auf, beispielsweise eine Kupferfolie mit Graphit-Beschichtung. Die zweite Elektrodenfolie weist eine Metallfolie 36 und eine Beschichtung 38 aus Elektrodenmaterial für die positive Elektrode auf, beispielsweise eine Aluminiumfolie mit Lithium-Nickel-Mangan-Cobald-Oxid-Beschichtung. Die Separatorlage 26 dient dazu, einen direkten elektrischen Kontakt der beiden Beschichtungen 34, 38 aus Elektrodenmaterial zu vermeiden.

Mindestens eine, vorzugsweise beide der in Fig. 2a dargestellten Elektrodenfolien 22, 24 sind mit einem Verfahren wie in den Figuren 1a-e illustriert bereitgestellt.

Demnach ist die Beschichtung mindestens einer, vorzugsweise sind die Beschichtungen beider Elektrodenfolien 22, 24 mit einem atmosphärischen Plasmastrahl plasmabehandelt.

Figur 2b zeigt den Folienstapel 30 aus Figur 2a in Draufsicht. Da die Breite der einzelne Folien des Folienstapels 30 und damit auch die Breite des Folienstapels 30 breiter ist als die für die Herstellung von Lithium-Ionen-Akkumulatoren erforderliche Breite, wird der Folienstapel 30 in mehrere Streifen 40 zerteilt, die eine für die Herstellung der gewünschten Lithium-Ionen-Akkumulatoren geeignete Breite b aufweisen. Alternativ können die Elektrodenfolien 32, 36 sowie ggf. die Separatorlage 26 und ggf. die Isolatorlage 28 auch vor dem Übereinanderstapeln in Fig. 2a zerteilt werden. Ebenso ist eine Zerteilung der Metallfolie 2 vor dem Plasmabehandeln der Beschichtung 10 (Fig. 1e) oder vor dem zweiten Trocknen (Fig. 1d) denkbar.

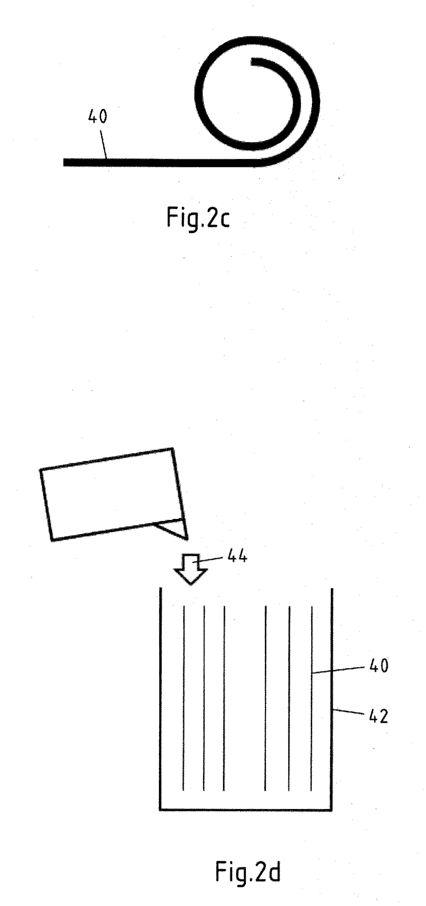

In dem in Figur 2c dargestellten Schritt wird ein solcher Streifen 40 des Folienstapels 30 aufgerollt und dann, wie weiter in Figur 2d in Schnittansicht illustriert, in ein Batteriegehäuse 42 eingesetzt. Anstelle des Aufrollens zur Herstellung eines zylindrischen Akkumulators, kann der Streifen 40 auch gefaltet werden, um einen rechteckigen Akkumulator herzustellen.

In das Gehäuse 42 wird ein flüssiger Elektrolyt 44 gefüllt, so dass der Elektrolyt in die Beschichtungen 34, 38 der beiden Elektrodenfolien 22, 24 des Streifens 40 eindringt und diese damit tränkt. Durch die zuvor durchgeführte Behandlung der Beschichtung 34 und/oder 38 mit dem atmosphärischen Plasmastrahl 14 wird die für das Durchtränken der Beschichtungen 34, 38 mit dem Elektrolyten erforderliche Zeit deutlich reduziert.

Auf diese Weise kann die Herstellungszeit für Lithium-Ionen-Akkumulatoren in wirtschaftlicher Weise gesenkt werden.

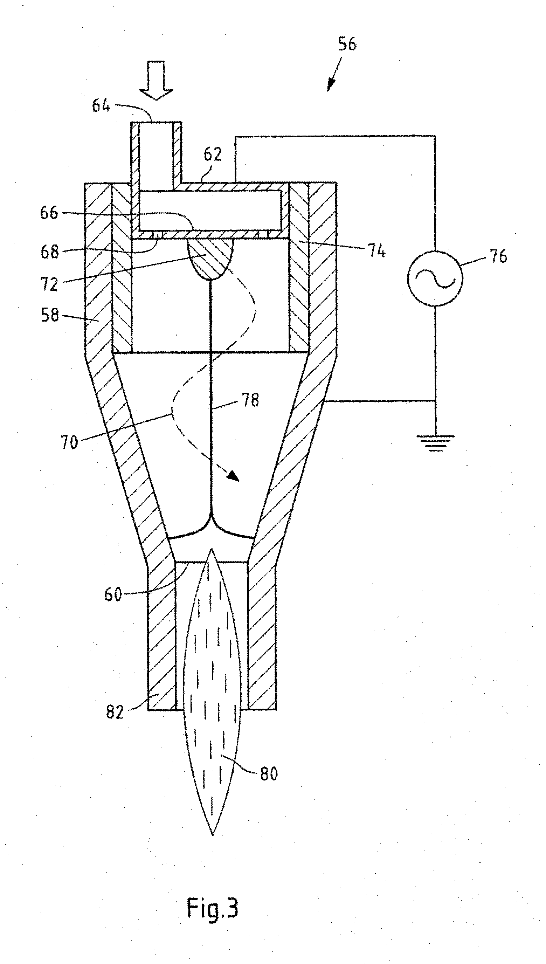

Figur 3 zeigt in schematischer Schnittansicht eine Plasmadüse 56, die bei dem in Figur 1e dargestellten Verfahrensschritt eingesetzt werden kann. Insbesondere kann die Plasmadüse 16 wie die Plasmadüse 56 ausgebildet sein.

Die Plasmadüse 56 weist ein Düsenrohr 58 aus Metall auf, das sich im Wesentlichen konisch zu einer Düsenrohrmündung 60 verjüngt. An dem der Düsenrohrmündung 60 entgegen gesetzten Ende weist das Düsenrohr 58 eine Dralleinrichtung 62 mit einem Einlass 64 für ein Arbeitsgas, beispielsweise Luft auf.

Eine Zwischenwand 66 der Dralleinrichtung 62 weist einen Kranz von schräg in Umfangrichtung angestellten Bohrungen 68 auf, durch die das Arbeitsgas verdrallt wird. Der stromabwärtige, konisch verjüngte Teil des Düsenrohres 58 wird deshalb von dem Arbeitsgas in Form eines Wirbels 70 durchströmt, dessen Kern auf der Längsachse des Düsenrohrs 58 verläuft.

An der Unterseite 66 ist mittig eine Elektrode 72 angeordnet, die koaxial in Richtung des verjüngenden Abschnitts in das Düsenrohr 58 hineinragt. Die Elektrode 72 ist elektrisch mit der Zwischenwand 66 und den übrigen Teilen der Dralleinrichtung 62 verbunden. Die Dralleinrichtung 62 ist durch ein Keramikrohr 74 elektrisch gegen das Düsenrohr 58 isoliert. Über die Dralleinrichtung 62 wird an die Elektrode 72 eine hochfrequente Hochspannung angelegt, die von einem Transformator 76 erzeugt wird. Der Einlass 64 ist über einen nichtgezeigten Schlauch mit einer unter Druck stehenden Arbeitsgasquelle mit variablem Durchsatz verbunden. Das Düsenrohr 58 ist geerdet. Durch die angeregte Spannung wird eine Hochfrequenzentladung in Form eines Lichtbogens 78 zwischen der Elektrode 72 und dem Düsenrohr 58 erzeugt.

Die Begriffe "Lichtbogen", "Bogenentladung" beziehungsweise "bogenartige Entladung" werden vorliegend als Beschreibungen der Entladung verwendet, da die Entladung in Form eines Lichtbogens auftritt. Der Begriff "Lichtbogen" wird anderweitig auch als Entladungsform bei Gleichspannungsentladungen mit im Wesentlichen konstanten Spannungswerten verwendet. Vorliegend handelt es sich jedoch um eine Hochfrequenzentladung in Form eines Lichtbogens, also um eine hochfrequente bogenartige Entladung.

Aufgrund der drallförmigen Strömung des Arbeitsgases wird dieser Lichtbogen 78 im Wirbelkern auf der Achse des Düsenrohrs 58 kanalisiert, sodass er sich erst im Bereich der Düsenrohrmündung 60 zur Wand des Düsenrohrs 58 verzweigt. Das Düsenrohr 58 stellt somit die Gegenelektrode dar.

Das Arbeitsgas, das im Bereich des Wirbelkerns und damit in unmittelbarer Nähe des Lichtbogens 78 mit hoher Strömungsgeschwindigkeit rotiert, kommt mit dem Lichtbogen 78 in innige Berührung und wir dadurch zum Teil in den Plasmazustand überführt, sodass ein atmosphärischer Plasmastrahl 80 durch die Düsenrohrmündung 60 und durch eine an die Düsenrohrmündung 60 angrenzende Auslassdüse 82 aus der Plasmadüse 56 austritt.

Der aus der Plasmadüse 56 austretende Plasmastrahl 80 weist eine hohe Reaktivität auf und ist aufgrund seiner verhältnismäßig niedrigen Temperatur in bereits geringem Abstand von der Auslassdüse oberflächenschonend, so dass eine wirksame Behandlung der Beschichtung aus Elektrodenmaterial erfolgen kann, ohne diese zu beschädigen.

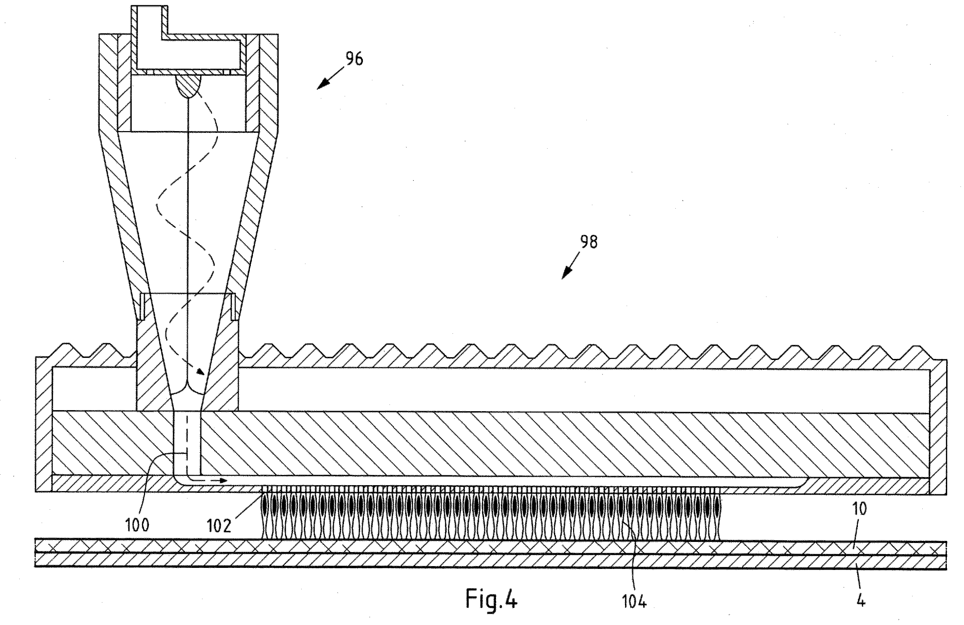

Figur 4 zeigt in schematischer Schnittansicht eine weitere Plasmadüse 96 mit einer Düsenanordnung 98, die bei dem in Figur 1e dargestellten Verfahrensschritt eingesetzt werden kann. Insbesondere kann die Plasmadüse 16 als Plasmadüse 96 mit angeschlossener Düsenanordnung 98 ausgebildet sein.

Die Plasmadüse 96 weist im Prinzip den gleichen Aufbau und die gleiche Funktionsweise auf wie die Plasmadüse 56 aus Figur 3. An die eigentliche Plasmadüse 96 ist die Düsenanordnung 98 angeschlossen, in die der Plasmastrahl 80 aus der Plasmadüse 96 gelangt. Diese Düsenanordnung 98 weist einen Kanal 100 auf, der so an die Plasmadüse 96 angeschlossen ist, dass der Plasmastrahl aus der Plasmadüse 96 in den Kanal 100 gelangt.

In die Kanalwandung des Kanals 100 sind entlang des Kanals nebeneinander mehrere Düsenöffnungen 102 eingebracht, so dass der Plasmastrahl 80 in mehrere Teilstrahlen 104 aufgeteilt wird, die aus den einzelnen Düsenöffnungen 102 austreten. Auf diese Weise wird ein Vorhang aus Plasmastrahlen erreicht, durch die gleichzeitig ein größerer Bereich, insbesondere der Beschichtung 10 aus Fig. 1e plasmabehandelt werden kann. Auf diese Weise kann die Plasmabehandlung der Beschichtung 10 in Fig. 1e effizient und mit einer geringeren Anzahl an Plasmadüsen durchgeführt werden.

Die in Figur 4 dargestellte und für den in Fig. 1e gezeigten Verfahrensschritt einsetzbare Plasmadüse 96 mit Düsenanordnung 98 ist grundsätzlich aus der DE 10 2016 125 699 A1 bekannt, auf die für weitere mögliche Merkmale und Funktionen dieser Plasmadüse mit Düsenanordnung verwiesen wird.

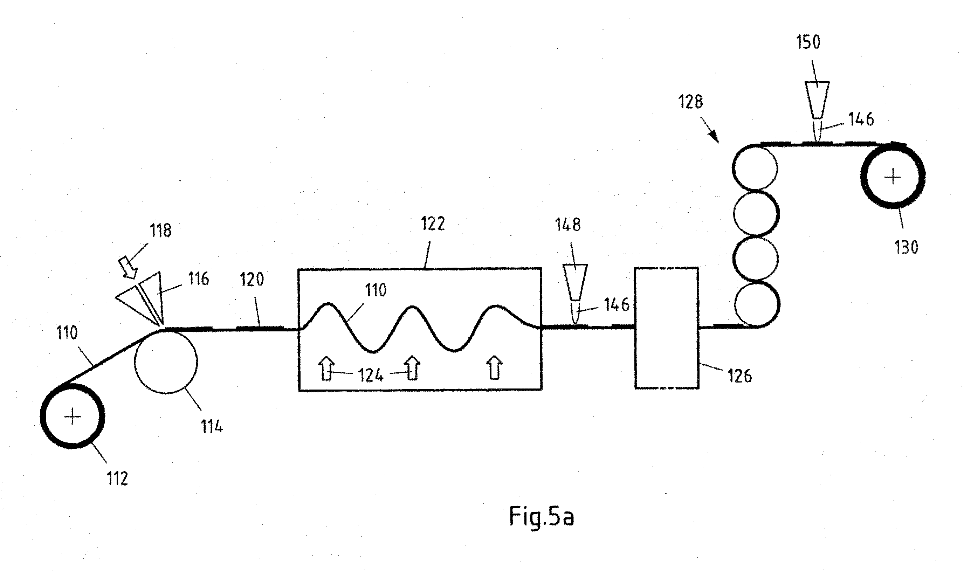

Die Fig. 5a-c zeigen ein weiteres Ausführungsbeispiel des Verfahrens zum Bereitstellen einer Elektrodenfolie zur Herstellung eines Lithium-Ionen-Akkumulators in schematischer Ansicht.

In der in Fig. 5a dargestellten ersten Schrittfolge wird eine Metallfolie 110 von einer Rolle 112 abgewickelt und über eine Rolle 114 geführt, gegenüber der eine Beschichtungsdüse 116 angeordnet ist, mit der die Metallfolie 110 abschnittsweise mit Elektrodenmaterial 118 in Form einer wässrigen Suspension aufgetragen wird, so dass eine Seite der Metallfolie 110 abschnittsweise mit Beschichtungen 120 aus Elektrodenmaterial versehen wird.

Die Metallfolie 110 mit den abschnittsweisen Beschichtungen 120 wird anschließend in einem Schwebetrockner 122 getrocknet, in dem von unten heiße Luft 124 gegen die Metallfolie 110 geblasen wird. Auf diese Weise verdampft ein Großteil des Wassers aus den Beschichtungen 120.

Nach einem anschließenden Kühlschritt in einer Kühleinrichtung 126 wird die mit den Beschichtungen 120 versehene Metallfolie 110 mit einem Kalander 128 kalandriert und zu einer Rolle aufgewickelt.

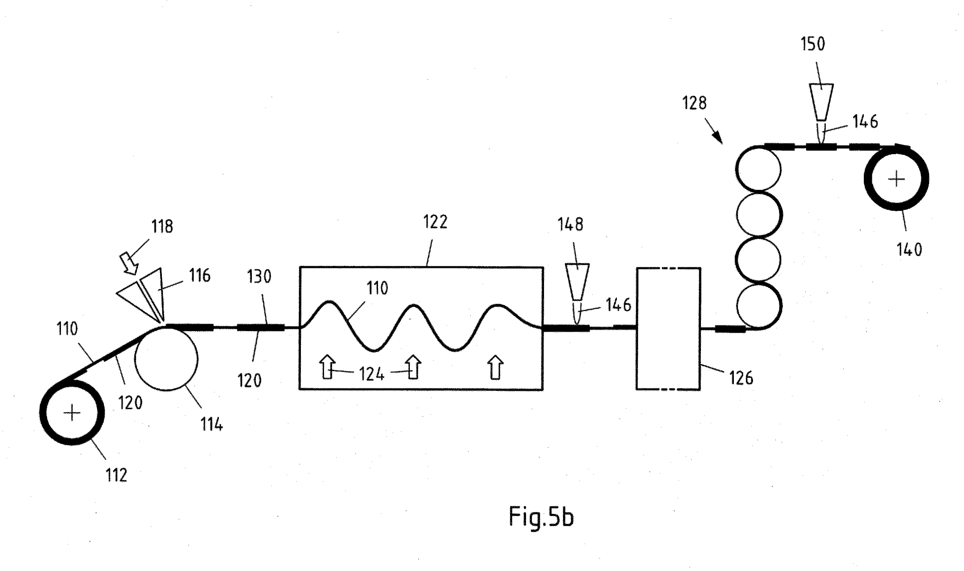

In der in Fig. 5b dargestellten zweiten Schrittfolge wird die einseitig mit abschnittsweisen Beschichtungen 120 versehene Metallfolie 110 auf der gegenüberliegenden Seite ebenfalls mit entsprechenden abschnittsweisen Beschichtungen 130 aus Elektrodenmaterial 118 versehen, im Schwebetrockner 122 getrocknet, in der Kühleinrichtung 126 abgekühlt und mit dem Kalander 128 kalandriert und zu einer Rolle 140 aufgerollt.

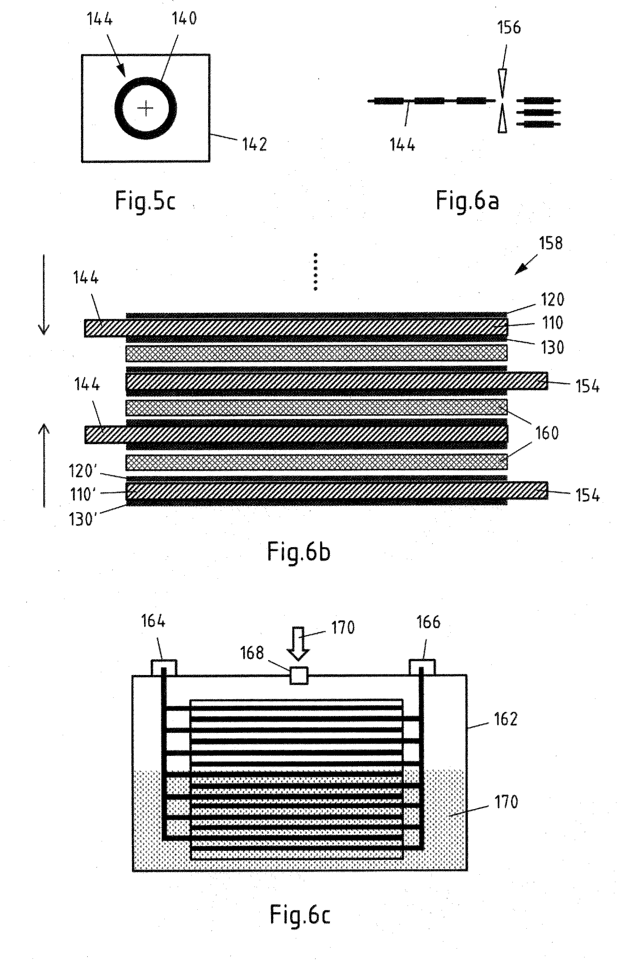

In dem in Fig. 5c gezeigten Schritt wird die Rolle 140 anschließend in einem Vakuumofen 142 vakuumgetrocknet, so dass die fertige Elektrodenfolie 144 erhalten wird.

Um die Zeitdauer für das vollständige Durchtränken der Beschichtungen 120, 130 aus Elektrodenmaterial mit einem Elektrolyten bei der späteren Herstellung von Lithium-Ionen-Akkumulatoren zu verkürzen, werden die Beschichtungen 120 und 130 mit einem atmosphärischen Plasmastrahl 146 beaufschlagt.

Die Beaufschlagung kann zum Beispiel nach der Grobtrocknung im Schwebetrockner 122 mit einer hinter dem Schwebetrockner angeordneten Plasmadüse 148 erfolgen. Alternativ kann die Beaufschlagung mit dem Plasmastrahl 146 auch nach dem Kalandrieren mit einer hinter dem Kalander 128 angeordneten Plasmadüse 150 erfolgen. Alternativ kann die Beaufschlagung mit dem Plasmastrahl 146 auch nach dem Feintrocknen im Vakuumofen 142 erfolgen. Zu diesem Zweck kann die Rolle 140 beispielsweise abgewickelt und von beiden Seiten mit atmosphärischen Plasmastrahlen beaufschlagt werden (nicht dargestellt). Die Elektrodenfolie 144 ist in diesem Fall nach der Plasmabehandlung fertiggestellt.

Die ein oder mehreren zur Beaufschlagung mit dem Plasmastrahl verwendeten Plasmadüsen, insbesondere die Plasmadüse 148 bzw. 150, können beispielsweise wie die Plasmadüse 56 oder wie die Plasmadüse 96 mit Düsenanordnung 98 ausgebildet sein.

Die Fig. 6a-c zeigen ein weiteres Ausführungsbeispiel des Verfahrens zur Herstellung eines Lithium-Ionen-Akkumulators.

Zunächst werden eine Elektrodenfolie für die positive Elektrode und eine Elektrodenfolie für die negative Elektrode, jeweils mit beidseitigen abschnittsweisen Beschichtungen aus Elektrodenmaterial für die positive bzw. negative Elektrode, mit dem in Fig. 5a-c beschriebenen Verfahren bereitgestellt. Bei der Elektrodenfolie für die positive Elektrode kann es sich insbesondere um die Elektrodenfolie 144 handeln, wobei als Metallfolie 110 eine Aluminiumfolie und für die Beschichtungen 120, 130 Lithium-Nickel-Mangan-Cobalt-Oxide-haltiges Elektrodenmaterial 118 verwendet wurde. Bei der Elektrodenfolie für die negative Elektrode kann es sich um eine in entsprechender Weise hergestellte Elektrodenfolie 154 handeln, wobei als Metallfolie 110' eine Kupferfolie und für die Beschichtungen 120', 130' Graphit-haltiges Elektrodenmaterial 118 verwendet wurde.

Die Elektrodenfolie 144 wird in dem in Fig. 6a gezeigten Schritt mit einer Schneidvorrichtung 156 in Abschnitte konfektioniert. In gleicher Weise wird in einem nicht dargestellten Schritt die Elektrodenfolie 154 in Abschnitte konfektioniert.

Die einzelnen Abschnitte der Elektrodenfolie 144 und 154 werden sodann wie in Fig. 6b gezeigt abwechselnd zu einem Stapel 158 übereinander gelegt, wobei jeweils eine Separatorlage 160, zum Beispiel in Form eines Polypropylen-Netzes, eingefügt wird, um den direkten elektrischen Kontakt der Beschichtungen 120, 120', 130, 130' der aufeinanderfolgenden Elektrodenfolien zu verhindern. Die Metallfolien 110, 110' der Elektrodenfolien 144 und 154 stehen jeweils zu einer Seite über, um eine spätere Kontaktierung mit der jeweiligen Elektrode zu ermöglichen.

Der fertige Stapel 158 wird wie in Fig. 6c gezeigt in ein Akkumulatorgehäuse 162 eingesetzt, wobei die überstehenden Metallfolien 110 der Elektrofolien 144 mit einem am Akkumulatorgehäuse 162 vorgesehenen positiven Akkumulatorpol 164 und die überstehenden Metallfolien 110' der Elektrofolien 154 mit einem am Akkumulatorgehäuse 162 vorgesehenen negativen Akkumulatorpol 166 elektrisch verbunden werden.

Anschließend wird das Akkumulatorgehäuse 162 durch eine vorgesehene Befüllöffnung 168 mit einem Elektrolyten 170, zum Beispiel mit in Ethylencarbonat gelösten Lithiumsalzen, befüllt, der sodann die Beschichtungen 120, 120', 130, 130' der Elektrodenfolien 144, 154 durchtränkt.

Durch die vorherige Plasmabehandlung der Beschichtungen 120, 120', 130, 130' mit dem atmosphärischen Plasmastrahl wird erreicht, dass der Elektrolyt 170 besser in die Beschichtungen 120, 120', 130, 130' eindringen kann, so dass die Zeitdauer für die Durchtränkung der Beschichtungen 120, 120', 130, 130' signifikant verkürzt werden kann.

Es wurden Versuche durchgeführt, um den Effekt der Plasmabehandlung des Elektrodenmaterials zu untersuchen. Zu diesem Zweck wurden Proben einer mit Graphit beschichtete Kupferfolie und einer mit Lithium-Nickel-Mangan-Cobalt-Oxiden (NMC) beschichtete Aluminiumfolie bereitgestellt. Die Graphitbeschichtung der Kupferfolie enthielt Carboxymethylcellulose und Styrol-Butadien-Kautschuk als Bindemittel. Die Lithium-Nickel-Mangan-Cobalt-Oxid-Beschichtung der Aluminiumfolie enthielt Polyvinylidenfluorid als Bindemittel.

Die Graphitbeschichtung und die Lithium-Nickel-Mangan-Cobalt-Oxid-Beschichtung wurden jeweils plasmabehandelt, indem die Beschichtungen mit einem atmosphärischen Plasmastrahl beaufschlagt wurden, der mit einer der in Fig. 3 dargestellten Plasmadüse entsprechenden Plasmadüse erzeugt wurde.

Auf die plasmabehandelten Beschichtungen wurden sodann Tropfen eines Elektrolyten aufgebracht und mittels Kontaktwinkelmessung die Zeit bis zur vollständigen Aufnahme des Tropfen in die Beschichtung gemessen. Als Elektrolyt wurde eine Lithium-Hexafluorophosphat-Lösung in Ethylencarbonat-d₄ und Ethyl-Methyl-Carbonat-d₈ (Sigma-Aldrich, 746711) verwendet. Die Zeit für die Aufnahme des Tropfens in die Beschichtung ist ein Indikator für die Zeit, die für das vollständige Durchtränken des Elektrodenmaterials mit Elektrolyt erforderlich ist.

Weiterhin wurden Vergleichsversuche mit entsprechenden, jedoch nicht plasmabehandelten Proben durchgeführt.

Die Ergebnisse der Messung sind in der folgenden Tabelle 1 dargestellt:

**Tabelle 1**

| **Probenmaterial** | **Ohne Plasmabehandlung** | **Mit Plasmabehandlung** |
|---|---|---|
| Kupferfolie mit Graphit-Beschichtung | 23,4 s | 6,13 s |
| Aluminiumfolie mit NMC-Beschichtung | 5,53 s | 3,45 s |

Wie die Versuchsergebnisse in Tabelle 1 zeigen, wurde durch die Plasmabehandlung in beiden Fällen eine Reduzierung der Zeit bis zur vollständigen Aufnahme des Elektrolyt-Tropfens erreicht, was entsprechend eine reduzierte Zeit bis zum vollständigen Durchtränken mit Elektrolyt anzeigt.

Dies zeigt, dass die Elektrolytaufnahme durch das Elektrodenmaterial mithilfe der Plasmabehandlung signifikant verbessert werden kann.

## Patentansprüche

1. Verfahren zum Bereitstellen einer Elektrodenfolie (14, 22, 24, 144, 154) zur Herstellung eines Lithium-Ionen-Akkumulators,
- bei dem eine Metallfolie (2, 32, 36, 110, 110') mit einer Beschichtung (10, 34, 38, 120, 120', 130, 130') aus Elektrodenmaterial (4, 118) bereitgestellt wird und
- bei dem die Beschichtung (10, 34, 38, 120, 120', 130, 130') aus Elektrodenmaterial (4,118) plasmabehandelt wird,
**dadurch gekennzeichnet,**
- **dass** die Beschichtung (10, 34, 38, 120, 120', 130, 130') aus Elektrodenmaterial (118) plasmabehandelt wird, indem die Beschichtung (10, 34, 38, 120, 120', 130, 130') mit einem atmosphärischen Plasmastrahl (16, 80, 146) beaufschlagt wird, wobei der atmosphärische Plasmastrahl (16, 80, 146) mit einer Plasmadüse (18, 56, 96, 148, 150) erzeugt wird.

2. Verfahren nach Anspruch 1,
**dadurch gekennzeichnet,**
- **dass** die Metallfolie (2, 32, 36, 110, 110') mit der Beschichtung (10, 34, 38, 120, 120', 130, 130') aus Elektrodenmaterial (4, 118) bereitgestellt wird, indem Elektrodenmaterial (4, 118) auf die Metallfolie (2, 32, 36, 110, 110') aufgetragen wird und das auf die Metallfolie (2, 32, 36, 110, 110') aufgebrachte Elektrodenmaterial (4, 118) getrocknet und kalandriert wird, und
- **dass** die Beschichtung (10, 34, 38, 120, 120', 130, 130') aus Elektrodenmaterial (4,118) nach dem Kalandrieren plasmabehandelt wird.

3. Verfahren nach Anspruch 1 oder 2,
**dadurch gekennzeichnet, dass** die Beschichtung (10, 34, 38, 120, 120', 130, 130') aus Elektrodenmaterial (4, 118) porös ist.

4. Verfahren nach einem der Ansprüche 1 bis 3,
**dadurch gekennzeichnet, dass** als Metallfolie (2, 32, 36) eine Aluminiumfolie oder eine Kupferfolie verwendet wird.

5. Verfahren nach einem der Ansprüche 1 bis 4,
**dadurch gekennzeichnet, dass** die Beschichtung (10, 34, 38, 120, 120', 130, 130') aus Elektrodenmaterial (4, 118) eine oder mehrere der folgenden Verbindungen enthält, vorzugsweise zumindest zu 90 Gew.-% daraus besteht: Lithium-Cobalt(III)-Oxid, Lithium-Nickel-Mangan-Cobalt-Oxide, Li-Spinelle, LiFePO₄.

6. Verfahren nach einem der Ansprüche 1 bis 4,
**dadurch gekennzeichnet, dass** die Beschichtung (10, 34, 38,120, 120', 130, 130') aus Elektrodenmaterial (4,118) eine oder mehrere der folgenden Verbindungen enthält, vorzugsweise zumindest zu 90 Gew.-% daraus besteht: Graphit, andere Li-interkalierende Kohlenstoffe, nanokristallines, amorphes Silizium, Lithiumtitanate, Zinndioxid.

7. Verfahren nach einem der Ansprüche 1 bis 6,
**dadurch gekennzeichnet, dass** der atmosphärische Plasmastrahl (16, 80, 146) durch hochfrequente elektrische Entladungen (78) zwischen Elektroden (72, 58) in einem Arbeitsgasstrom erzeugt wird.

8. Verfahren nach Anspruch 7,
**dadurch gekennzeichnet, dass** zur Erzeugung des atmosphärischen Plasmastrahls (18, 56, 96, 146) eine Plasmadüse (96) mit einer Düsenanordnung (98) verwendet wird, die den mit der Plasmadüse (96) erzeugten Plasmastrahl (80) in mehrere aus mehreren entlang eines Kanals angeordneten Düsenöffnungen (102) der Düsenanordnung (98) austretende Teilstrahlen (104) aufteilt.

9. Verfahren zur Herstellung eines Lithium-Ionen-Akkumulators,
- bei dem eine erste Elektrodenfolie (22, 154) für die negative Elektrode und eine zweite Elektrodenfolie (24, 144) für die positive Elektrode bereitgestellt werden,
- bei dem die erste und die zweite Elektrodenfolie (22, 24, 144, 154) unter Zwischenlage einer Separatorlage (26, 160) zu einem Folienstapel (30, 158) übereinander angeordnet werden und
- bei dem der Folienstapel (30, 158) mit einem flüssigen Elektrolyt (44, 170) getränkt wird,
**dadurch gekennzeichnet,**
- **dass** die erste und/oder die zweite Elektrodenfolie (22, 24, 144, 154) mit einem Verfahren nach einem der Ansprüche 1 bis 8 bereitgestellt werden.

## Claims

1. Method for providing an electrode foil (14, 22, 24, 144, 154) for the manufacture of a lithium-ion accumulator,
- in which a metal foil (2, 32, 36, 110, 110') with a coating (10, 34, 38, 120, 120', 130, 130') of electrode material (4, 118) is provided, and
- in which the coating (10, 34, 38, 120, 120', 130, 130') of electrode material (4, 118) is plasma-treated,
**characterised**
- **in that** the coating (10, 34, 38, 120, 120', 130, 130') of electrode material (118) is plasma-treated by exposing the coating (10, 34, 38, 120, 120', 130, 130') to an atmospheric plasma jet (16, 80, 146), the atmospheric plasma jet (16, 80, 146) being generated with a plasma nozzle (18, 56, 96, 148, 150).

2. Method according to claim 1,
**characterised**
- **in that** the metal foil (2, 32, 36, 110, 110') with the coating (10, 34, 38, 120, 120', 130, 130') of electrode material (4, 118) is provided by applying electrode material (4, 118) to the metal foil (2, 32, 36, 110, 110') and drying and calendering the electrode material (4, 118) applied to the metal foil (2, 32, 36, 110, 110'), and
**in that** the coating (10, 34, 38, 120, 120', 130, 130') of electrode material (4, 118) is plasma-treated after calendering.

3. Method according to claim 1 or 2,
**characterised in that** the coating (10, 34, 38, 120, 120', 130, 130') of electrode material (4, 118) is porous.

4. Method according to one of claims 1 to 3,
**characterised in that** an aluminum foil or a copper foil is used as the metal foil (2, 32, 36).

5. Method according to one of claims 1 to 4,
**characterised in that** the coating (10, 34, 38, 120, 120', 130, 130') of electrode material (4, 118) contains one or more of the following compounds, preferably consists thereof by at least 90 wt.-%: lithium cobalt(III) oxide, lithium nickel manganese cobalt oxides, Li spinels, LiFePO₄.

6. Method according to any one of claims 1 to 4,
**characterised in that** the coating (10, 34, 38, 120, 120', 130, 130') of electrode material (4, 118) contains one or more of the following compounds, preferably consists thereof by at least 90 wt.-%: graphite, other Li-intercalating carbons, nanocrystalline amorphous silicon, lithium titanates, tin dioxide.

7. Method according to one of claims 1 to 6,
**characterised in that** the atmospheric plasma jet (16, 80, 146) is generated by high-frequency electrical discharges (78) between electrodes (72, 58) in a working gas stream.

8. Method according to claim 7,
**characterised in that** a plasma nozzle (96) with a nozzle arrangement (98) is used to generate the atmospheric plasma jet (18, 56, 96, 146), which nozzle arrangement divides the plasma jet (80) generated with the plasma nozzle (96) into a plurality of partial jets (104) emerging from a plurality of nozzle openings (102) of the nozzle arrangement (98) arranged along a channel.

9. Method for manufacturing a lithium-ion accumulator
- in which a first electrode foil (22, 154) is provided for the negative electrode and a second electrode foil (24, 144) is provided for the positive electrode,
- in which the first and second electrode foils (22, 24, 144, 154) are arranged one above the other with a separator layer (26, 160) between them to form a foil stack (30, 158), and
- in which the foil stack (30, 158) is impregnated with a liquid electrolyte (44, 170),
**characterised**
- **in that** the first and/or the second electrode foil (22, 24, 144, 154) are provided by a method according to any one of claims 1 to 8.

## Revendications

1. Procédé de mise à disposition d'une feuille d'électrode (14, 22, 24, 144, 154) pour la fabrication d'un accumulateur au lithium-ion,
- dans lequel une feuille métallique (2, 32, 36, 110, 110') avec un revêtement (10, 34, 38, 120, 120', 130, 130') en matériau d'électrode (4, 118) est mise à disposition, et
- dans lequel le revêtement (10, 34, 38, 120, 120', 130, 130') en matériau d'électrode (4, 118) est traité par plasma,
**caractérisé**
- **en ce que** le revêtement (10, 34, 38, 120, 120', 130, 130') en matériau d'électrode (118) est traité par plasma, en soumettant le revêtement (10, 34, 38, 120, 120', 130, 130') à un jet de plasma atmosphérique (16, 80, 146), le jet de plasma atmosphérique (16, 80, 146) étant produit avec une buse à plasma (18, 56, 96, 148, 150).

2. Procédé selon la revendication 1,
**caractérisé**
- **en ce que** la feuille métallique (2, 32, 36, 110, 110') avec le revêtement (10, 34, 38, 120, 120', 130, 130') en matériau d'électrode (4, 118) est mise à disposition en appliquant du matériau d'électrode (4, 118) sur la feuille métallique (2, 32, 36, 110, 110'), et en séchant et calandrant le matériau d'électrode (4, 118) appliqué sur la feuille métallique (2, 32, 36, 110, 110'), et
- **en ce que** le revêtement (10, 34, 38, 120, 120', 130, 130') en matériau d'électrode (4, 118) est traité par plasma après le calandrage.

3. Procédé selon la revendication 1 ou 2,
**caractérisé en ce que** le revêtement (10, 34, 38, 120, 120', 130, 130') en matériau d'électrode (4, 118) est poreux.

4. Procédé selon l'une des revendications 1 à 3,
**caractérisé en ce qu'**une feuille d'aluminium ou une feuille de cuivre est utilisée comme feuille métallique (2, 32, 36).

5. Procédé selon l'une des revendications 1 à 4,
**caractérisé en ce que** le revêtement (10, 34, 38, 120, 120', 130, 130') en matériau d'électrode (4, 118) contient un ou plusieurs des composés suivants, de préférence en est constitué au moins à 90 % en poids : oxyde de lithium-cobalt (III), oxydes de lithium-nickel-manganèse-cobalt, Li-Spinelle, LiFePO₄ .

6. Procédé selon l'une des revendications 1 à4,
**caractérisé en ce que** le revêtement (10, 34, 38, 120, 120', 130, 130') en matériau d'électrode (4, 118) contient un ou plusieurs des composés suivants, de préférence en est constitué au moins à 90 % en poids : graphite, autres carbones intercalant du Li, silicium amorphe nanocristallin, titanates de lithium, dioxyde d'étain.

7. Procédé selon l'une des revendications 1 à 6,
**caractérisé en ce que** le jet de plasma atmosphérique (16, 80, 146) est généré par des décharges électriques à haute fréquence (78) entre des électrodes (72, 58) dans un courant de gaz de travail.

8. Procédé selon la revendication 7,
**caractérisé en ce que**, pour générer le jet de plasma atmosphérique (18, 56, 96, 146), une buse à plasma (96) avec un agencement de buses (98) est utilisée, lequel agencement divise le jet de plasma (80) généré par la buse à plasma (96) en plusieurs jets partiels (104) sortant de plusieurs ouvertures de buse (102) de l'agencement de buses (98) disposées le long d'un canal.

9. Procédé de fabrication d'un accumulateur au lithium-ion,
- dans lequel une première feuille d'électrode (22, 154) est mise à disposition pour l'électrode négative et une deuxième feuille d'électrode (24, 144) est mise à disposition pour l'électrode positive,
- dans lequel la première et la deuxième feuille d'électrode (22, 24, 144, 154) sont superposées en formant une pile de feuilles (30, 158) avec interposition d'une couche de séparateur (26, 160) et
- dans lequel la pile de feuilles (30, 158) est imprégnée d'un électrolyte liquide (44, 170),
**caractérisé**
- **en ce que** la première et/ou la deuxième feuille d'électrode (22, 24, 144, 154) sont mises à disposition avec un procédé selon l'une des revendications 1 à 8.
